# EUROPÄISCHE PATENTSCHRIFT

(11) **EP 1 085 231 B1**
(45) Veröffentlichungstag und Bekanntmachung des Hinweises auf die Patenterteilung: **10.03.2004**
(21) Anmeldenummer: 99117321.2
(22) Anmeldetag: 03.09.1999
(51) Int. Cl.: F16D 69/02, B29C 71/04

(54) **Verfahren und Vorrichtung zur thermischen Behandlung von Reibbelagoberflächen**
Method and apparatus for heat treatment of friction surfaces
Procédé et appareil pour le traitement thermique de surfaces de friction

(43) Veröffentlichungstag der Anmeldung: 21.03.2001
(73) Patentinhaber: AlliedSignal Bremsbelag GmbH, 21509 Glinde (DE)
(72) Erfinder: Grimme, Hansjörg, 21509 Glinde (DE)
(74) Vertreter: Richter, Werdermann, Gerbaulet & Hofmann

(56) Entgegenhaltungen:
- WO-A-98/41387
- DE-A- 3 516 759
- DE-A- 4 445 882

## Beschreibung

Die Erfindung betrifft ein Verfahren und eine Vorrichtung zur thermischen Behandlung von Reibbelagoberflächen gemäß dem Oberbegriff des Anspruches 1.

Ein Verfahren und eine Vorrichtung der eingangs genannten Art sind aus der EP 0 799 391 B1 bekannt. Sie dienen der Behandlung der Oberflächen von Reibbelägen, welche insbesondere in Bremsen von Kraftfahrzeugen zum Einsatz kommen. Derartige Reibbelagoberflächen enthalten in der Regel organische Bindemittel. Um ein sogenanntes Greenfading beim ersten Bremseinsatz mit entsprechender Hitzeentwicklung zu vermeiden, werden die Reibbelagoberflächen vor ihrem Einbau einer thermischen Behandlung, dem sogenannten Scorchen, unterzogen.

Eine bekannte Art des Scorchens besteht in der Behandlung der Reibbelagoberfläche mit einer Gasflamme. Nachteilig daran ist jedoch die starke Abhängigkeit der Temperatur auf der Reibbelagoberfläche von der Gasflamme, insbesondere von der Zusammensetzung des verwendeten Brenngases und dem Sauerstoffangebot während des Brennvorganges. Eine zu heiße Flamme kann dabei zum Schmelzen der anorganischen Bestandteile bzw. der Metalle in der Reibbelagoberfläche führen, eine kalte Flamme dagegen zu sehr langen Behandlungszeiten bzw. zum Verrußen der Reibbelagoberfläche.

Weiterhin wird im Stand der Technik ein Scorchen durch das Anlegen bzw. Anpressen einer heißen Platte vorgenommen. Dabei kann es jedoch zu einer Versiegelung der Reibbelagoberfläche während des Kontaktes mit der heißen Platte kommen. Außerdem läßt sich die Temperatur der heißen Platte nur sehr schwer über die gesamte Fläche konstant halten, und die schlechte Wärmeleitung der üblicherweise verwendeten hochlegierten, temperaturfesten Stähle wirkt sich nachteilig auf den Wärmeübergang aus.

In der oben genannten EP 0 799 391 B1 erfolgt das Scorchen ebenfalls durch Anlegen einer heißen Platte. Um einen Teil der damit verbundenen Probleme wie insbesondere die Versiegelung der Reibbelagoberfläche und die ungleichmäßige Temperaturverteilung zu vermeiden und einen taktweisen Betrieb zu erlauben, wird dabei der Einsatz von mehreren hintereinandergelegenen Heizstationen vorgeschlagen, in denen die Erhitzung stufenweise erfolgt. Dieses Vorgehen bedeutet indes einen hohen Investitions- und Betriebsaufwand. Ferner bleibt das Problem einer ungleichmäßigen Erhitzung der Oberfläche grundsätzlich bestehen, und im Zeitpunkt des Anpressens entstehende Gase können nicht von der Oberfläche entweichen.

Die DE 35 16 759 A beschreibt ein Verfahren zum Vorkonditionieren eines Bremsschuhs durch wahlweises Brennen der Reibfläche zur Herstellung von Streifen, in dem die Bestandteile neben der Reibfläche mittels Lasers wärmebehandelt werden, um die Anfangsreibung zu erhöhen, wenn der erzeugte Bremsschuh mit einem anderen Teil zur Bremsung in Anlage gegen eine Bremstrommel oder einen Rotor gebracht wird.

Das bekannte Verfahren geht davon aus, dass eine verbesserte Anfangsreibung bei einer Reibfläche erzielt wird, wenn diese erwärmt wird, bis die organischen Bestandteile des Bremsschuhs verkohlt sind. Die Verwendung eines hohen Betrages an thermischer Energie, die zur Behandlung der Oberfläche erforderlich ist, führt dazu, dass die Bestandteile unterhalb der Reibfläche beeinträchtigt werden.

Das Verfahren sieht deshalb vor, eine Folge von Lichtstrahlen hoher Energie (Laser) zu verwenden, um eine Reihe von Streifen in Längsrichtung zum Bremsschuh verlaufend an der Oberfläche der Reibfläche wahlweise zu erwärmen. Der geschliffene Bremsschuh wird mittels einer Fördereinrichtung mit konstanter Geschwindigkeit am Kopf des Lasers vorbeigeführt. Vermittels der durch die Lichtstrahlen erzeugten thermischen Energie verkohlen die organischen Bestandteile, wodurch chemisch veränderte Streifen an der Reibfläche gebildet werden. Die Bestandteile jedes Streifens haben einen Reibungskoeffizienten, der sich von demjenigen des restlich unbehandelten Bremsschuhes unterscheidet. Hiernach wird somit ein Muster von Bereichen auf der Oberfläche des Bremsschuhs geschaffen, in denen die organischen Bestandteile und die metallischen Bestandteile oxidiert oder geschmolzen sind. Es wird jedoch nicht die gesamte Oberfläche mit hoher Energie behandelt, sondern nur ein Muster, z. B. in Form von Streifen, so dass unbehandelte Flächenabschnitte erhalten bleiben, was dazu führt, dass die Anfangsreibung bei Anlage gegen ein anderes Teil nicht den optimalen Reibungskoeffizienten des Bremsschuhs entsprechen kann, was allerdings nur dann erreichbar wäre, wenn der gesamte Oberflächenbereich des Bremsschuhes wärmebehandelt ist.

Die Behandlung von Polymeren mit einer Infrarotbestrahlung ist durch die WO 98/41387 bekannt, die ein Verfahren zur Behandlung von im Reaktionsspritzgussverfahren geformten Polyurethan-, Polyurethan/Polykarbamid- und Polykarbamidpolymeren betrifft, wobei das Verfahren darin besteht, ein im Reaktionsspritzgussverfahren geformtes Polyurethan-, Polyurethan/Polykarbamid- und Polykarbamidpolymer einer ausreichenden Menge infraroter Strahlung auszusetzen, um die Temperatur des Polymers auf mindestens 180° C zu erhöhen. Anschließend wird die über dieser Temperatur gehalten, um die unter Verwendung von ASTMD-3029 gemessene Gardner-Stoßeigenschaft im Vergleich zu demselben Polymer zu erhöhen, das in einem Konvektionsofen auf dieselbe Temperatur erhitzt und für die gleiche Zeit auf ihr gehalten wurde. Dadurch sollen die Stoß-, Warmdurchbiegungs- und Formbeständigkeitstemperatureigenschaften verbessert werden.

Der Erfindung liegt die Aufgabe zugrunde, ein Verfahren und eine Vorrichtung der eingangs genannten Art derart zu verbessern, das eine einfache, automatisierbare, kostengünstige und im Ergebnis hochwertige thermische Behandlung (Scorchen) von Reibbelagoberflächen möglich ist.

Diese Aufgabe wird durch ein Verfahren mit den Merkmalen des Anspruches 1 und eine Vorrichtung mit den Merkmalen des Anspruchs 4 gelöst.

Demnach ist das Verfahren, bei dem in bekannter Weise die Reibbelagoberfläche für eine begrenzte Zeitdauer auf eine erhöhte Temperatur gebracht wird, dadurch gekennzeichnet, daß
- die gesamte Fläche der Reibbelagoberfläche unter Ausschluss nicht bestrahlter Abschnitte in einer inerten, oxidierenden oder reduzierenden Atmosphäre oder einer Unterdruck-Atmospähre wärmebestrahlt wird,
- zur Temperaturerhöhung der Reibbelagoberfläche ein kurzwelliges Infrarotlicht mit einer Wellenlänge von 780 bis 1400 nm verwendet wird, wobei das Intensitätsmaximum bei 1200 nm liegt,
- die Reibbelagoberfläche mit einer Leistungsschicht des Infrarotlichtes von 150 bis 800 kW/m² bei einer Temperaturerhöhung bis zu einer Temperatur von 700° C bis 900° C für einen Zeitraum von 5 s bis 40 s, insbesondere 25 s bis 35 s, bestrahlt wird,
- die Reibbelagoberfläche während der Bestrahlung an der Infrarotlichtquelle mit einer Geschwindigkeit von 1,0 bis 2,0 m/min. entlang transportiert wird.

Hierdurch lassen sich verschiedene bedeutende Vorteile erzielen. So ist zum einen die Zufuhr der Wärme genau steuerbar. Daher kann die Reibbelagoberfläche sehr gleich-mäßig und sehr exakt auf die gewünschte Temperatur erhitzt werden. Zum anderen müssen keine Teile mit der Reibbelagoberfläche in Kontakt kommen. Die durch die Erhitzung gegebenenfalls an der Reibbelagoberfläche entstehenden Gase können daher frei aus der Oberfläche austreten und führen dort nicht zu Schäden. Auch kann das die Reibbelagoberfläche um-gebende Medium frei gewählt werden, so daß sich z.B. Atmosphären mit bestimmter Wirkung auf die Reibbelagoberfläche eingestellt werden können. Nicht zuletzt verursacht der Einsatz von Infrarotlicht auch geringere Investitions- und Betriebskosten. Zur Senkung der Betriebskosten trägt dabei insbesondere die geringere Störanfälligkeit und die Automatisierbarkeit des Verfahrens sowie die Einsparung von Energie bei, da durch das Infrarotlicht die Wärmeenergie exakt und ohne hohe Verluste an ihren Wirkungsort gebracht werden kann. Reduzierte Investitionskosten ergeben sich aus einem wesentlich vereinfachten mechanischen Aufbau.

Das verwendete Infrarotlicht hat eine Wellenlänge von 780 bis 1400 nm, wobei das Intensitätsmaximum bei 1200 nm liegt. Es handelt sich also vorzugsweise um kurzwellige Infrarotstrahlung. Der Vorteil der kurzwelligen Infrarotstrahlung ist, daß diese Strahlung die Wärmeenergie sehr effizient und ohne ein Medium transportiert. Die Erwärmung der Reibbelagoberfläche kann daher auch im Unterdruckbetrieb durchgeführt werden bzw. die Beseitigung der beim Scorchen anfallenden Zersetzungsprodukte aus den organischen Bestandteilen der Reibbeläge kann mit starken Absaugeinrichtungen durchgeführt werden, ohne den Wärmetransport von den Infrarotlichtquellen zur Reibbelagoberfläche zu beeinträchtigen. Ein weiterer Vorteil der kurzwelligen Infrarotstrahlung ist, daß die hierfür verwendeten Infrarotstrahler eine sehr kurze Reaktionszeit von 1 bis 3 s haben, so daß die Scorchanlage nicht in ständigem Betrieb sein muß und nur bei Bedarf, d.h. für den eigentlichen Scorchvorgang, eingeschaltet werden muß, um die für den Arbeitsvorgang erforderliche Temperatur zu erreichen.

Die Reibbelagoberfläche wird mit einer Leistungsdichte des Infrarotlichtes von 150 bis 800 kW/m² bestrahlt. Bei diesen Werten wird die Reibbelagoberfläche schnell erhitzt, ohne daß es jedoch aufgrund lokaler Überhitzungen zu Schäden käme oder die Wärme sich ungleichmäßig auf der Oberfläche verteilt.

Die Temperaturerhöhung erfolgt bis zu einer Temperatur von 700 bis 900°C, um ein optimales Scorchen zu gewährleisten.

Die Bestrahlung einer Reibbelagoberfläche erfolgt für einen Zeitraum von 5 bis 40 s, vorzugsweise für 25 bis 35 s. Derartige Werte garantieren einerseits ein gutes Behandlungsergebnis, andererseits erfolgt die Behandlung schnell und erlaubt daher eine automatisierte Produktion. Dabei ist zu beachten, daß beispielsweise im Vergleich zur EP 0 799 391 B1 grundsätzlich nur ein einziger Erhitzungsschritt notwendig ist Falls aus irgendwelchen Gründen wünschenswert, könnte natürlich auch eine mehrstufige Erhitzung durch entsprechende Ansteuerung oder Anordnung der Infrarotlichtquellen erfolgen.

Die Reibbelagoberfläche wird während der Bestrahlung an der Infrarotlichtquelle entlang transportiert, was mit einer Geschwindigkeit von 1,0 bis 2,0 m/min geschieht. Hierdurchläuft der Produktionsprozeß kontinuierlich und mit bekannter Geschwindigkeit, und die Infrarotlichtquellen müssen nicht in ständigem Wechsel ein- und ausgeschaltet werden. Weiterhin hat eine thermische Behandlung während des Transportes den Vorteil, daß sich eventuelle Inhomogenitäten im Strahlungsfeld der Infrarotlichtquellen ausgleichen, da die Reibbelagoberfläche im Strahlungsfeld bewegt wird.

Die Reibbelagoberfläche wird nach der Bestrahlung abgekühlt. Hierdurch wird unter anderem die schnelle weitere Verarbeitbarkeit der Reibbeläge ermöglicht.

Durch die thermische Behandlung in einer inerten, oxidierenden, reduzierenden oder Unterdruck-Atmosphäre können gewünschte Eigenschaften der Reibbelagoberfläche gezielt beeinflußt werden. Die Wahl der Atmosphäre kann dabei vollständig in Hinblick auf das gewünschte Resultat erfolgen, da die Bestrahlung mit Infrarotlicht kaum Restriktionen in bezug auf die verwendbaren Atmosphären auflegt. Ein unterstützender Einsatz solcher Atmosphären war im Stand der Technik weder bei der Erhitzung mit Flammen noch mit heißen Platten möglich.

Die Temperatur der Reibbelagoberfläche wird gemessen und in Abhängigkeit hiervon der Behandlungsprozeß gesteuert. Da die Reibbelagoberfläche während der thermischen Behandlung immer frei zugänglich ist, kann - anders als im Stand der Technik - eine Temperaturmessung jederzeit erfolgen. Es kann daher die Einhaltung geforderter Scorchbedingungen genau überwacht werden. Bei einer Abweichung von Sollwerten kann eine Einflußnahme auf den Behandlungsprozeß erfolgen, z.B. über die Veränderung der Leistung der Infrarotlichtquellen, über den Transport oder das Aussortieren der Reibbeläge. Das Anfallen von Produktionsausschuß wird damit minimiert.

In einer Weiterbildung der Prozesssteuerung müssen für den Betrieb der Infrarotlichtquelle mindestens eine und vorzugsweise alle der folgenden Maßnahmen in Betrieb sein:
a) Absaugung der Abgase im Behandlungsraum,
b) Kühlung der Reibbelagoberfläche nach der thermischen Behandlung,
c) Kühlung der Infrarotlichtquelle,
d) Transport der Reibbelagoberflächen,
e) Prozeßüberwachungssensoren, insbesondere Temperatursensoren für die Reibbelagoberflächen.

Durch die Überwachung der genannten Bedingungen wird sichergestellt, daß die Wärmeabgabe nicht in einer Situation erfolgt, in der sie zu gefährlichen und schädigenden Wirkungen führen könnte, beispielsweise bei einem Stau des Transportbandes.

Die Erfindung betrifft weiterhin eine Vorrichtung zur thermischen Behandlung von Reibbelagoberflächen gemäß dem Oberbegriff des Anspruch 4, welche in der Weise ausgebildet ist, daß die Heizstation und/oder die Kühlstation eine Absaugeinrichtung aufweist, dass sich im Anschluß an die Heizstation ein Temperatursensor anschließt, welcher vorzugsweise mit der Steuerung der Infrarotlichtquellen verbunden ist, dass im Anschluß an die Heizstation eine Ausschleusung für defekte Reibbeläge angeordnet ist und dass vor der Heizstation eine Objekterfassung angeordnet ist, mit welcher das Eintreten von Reibbelägen in die Heizstation erkannt werden kann und welche vorzugsweise mit der Steuerung der Infrarotlichtquelle verbunden ist.

Eine derartige Vorrichtung verursacht im Vergleich zu den aus dem Stand der Technik bekannten Anlagen reduzierte Investitionskosten, da sie einen wesentlich vereinfachten mechanischen Aufbau hat. Ferner lassen sich mit einer derartigen Vorrichtung insbesondere das oben geschilderte Verfahren durchführen und dessen Vorteile erzielen. Dabei kann aufgrund der guten Steuerbarkeit der Wärmezufuhr die Reibbelagoberfläche sehr gleichmäßig und sehr exakt auf die gewünschte Temperatur erhitzt werden. Zum anderen müssen keine Teile der Vorrichtung mit der Reibbelagoberfläche in Kontakt kommen, was Fehlerquellen reduziert und die Behandlungsoptionen erweitert (z.B. Einstellung bestimmter Atmosphären, Temperaturüberwachung).

Durch die Heizstation führt vorzugsweise eine Fördereinrichtung für die Reibbeläge. Die Vorrichtung kann daher auf einfache Weise in einen Produktionsprozeß integriert werden, indem sie beispielsweise um ein Förderband herum aufgebaut wird. Weiterhin hat die thermische Behandlung während des Transportes der Reibbeläge den Vorteil, daß eventuelle Inhomogenitäten des Strahlungsfeldes ausgeglichen werden und eine Steuerung der Bestrahlungsdauer über die Fördergeschwindigkeit erfolgen kann.

Im Anschluß an die Heizstation ist eine Kühlstation angeordnet. Die Angabe "im Anschluß" ist dabei hier und im folgenden in bezug auf die produktionsbedingte Transportrichtung der Reibbeläge zu verstehen. Eine Kühlstation unterstützt die thermische Behandlung und ermöglicht durch die beschleunigte Abkühlung der Reibbeläge deren rasche Weiterverarbeitung.

Die Heizstation und/oder die Kühlstation weisen eine Absaugeinrichtung auf. Bei der Wärmebehandlung eventuell anfallende Zersetzungsprodukte können hierdurch effizient entfernt und einer geeigneten Entsorgung zugeführt werden.

Im Anschluß an die Heizstation ist ein Temperatursensor angeordnet, welcher vorzugsweise mit der Steuerung der Infrarotlichtquellen verbunden ist. Ober den kann die Einhaltung der gewünschten Oberflächentemperaturen der Reibbeläge überwacht werden. Auf eine Abweichung kann dann schnell reagiert werden, insbesondere durch Erhöhung oder Verringerung der Leistung der Infrarotlichtquellen, um für die nachfolgenden Reibbeläge wieder korrekte Ergebnisse sicherzustellen.

Im Anschluß an die Heizstation ist eine Ausschleusung für defekte Reibbeläge angeordnet sein. Diese ist vorzugsweise mit der genannten Temperaturüberwachung gekoppelt, so daß unzureichend behandelte Reibbeläge sofort aussortiert werden können. Das Merkmal "defekt" ist dabei weit zu verstehen und schließt auch Abweichungen von einem Sollzustand ein, die nicht unbedingt zur Unbrauchbarkeit des Reibbelages führen.

Ferner ist vor der Heizstation eine Objekterfassung angeordnet, mit welcher das Eintreten von Reibbelägen in die Heizstation erkannt werden kann und welche vorzugsweise mit der Steuerung der Infrarotlichtquellen verbunden ist. Sollte somit zwischen den Reibbelägen ein größerer Abstand auftreten, können die Infrarotlichtquellen zur Schonung der Anlage und zur Energieerspamis abgeschaltet werden.

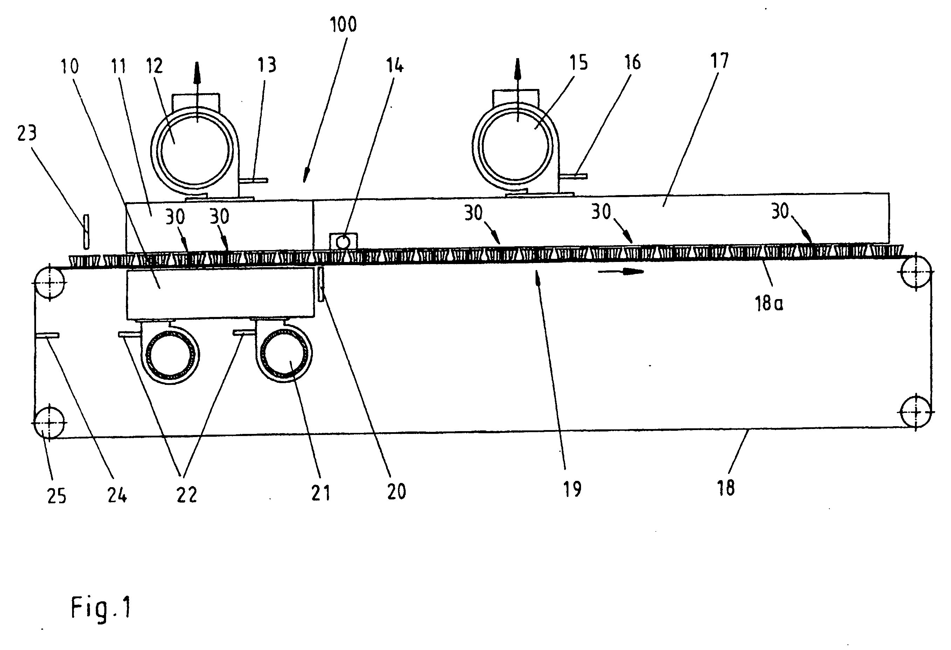

Im folgenden wird die Erfindung anhand der Fig. 1 beispielhaft erläutert. Diese zeigt schematisch den Aufbau einer erfindungsgemäßen Vorrichtung zur thermischen Behandlung von Reibbelagoberflächen (Scorchen).

Die Vorrichtung 100 ist um ein Transportband 18 herum angeordnet, welches von vier Umlenkrollen 25 endlos in Pfeilrichtung umlaufend geführt wird und vorzugsweise als Stabgeflechtförderband aus temperaturfestem Stahl ausgeführt ist. Auf der oberen (Vor-)Laufseite 18a des Transportbandes 18 befinden sich in möglichst dichtem Abstand Reibbeläge 30 mit der thermisch zu behandelnden Reibbelagoberfläche 19 nach unten gerichtet. Der weitere Aufbau der Vorrichtung 100 wird im folgenden mit Bezug auf die Umlaufrichtung (Pfeil) des Transportbandes 18 beschrieben.

Am Eingang der Vorrichtung 100 befindet sich ein Sensor 23 für die Objekterfassung. Hiermit kann festgestellt werden, ob ein Reibbelag auf dem Transportband 18 aufliegt.

Hinter dem Sensor 23 beginnt die thermische Behandlung in einem Abschnitt der Vorrichtung, der aus der unter dem Transportband 18 angeordneten Heizstation 10 und der gegenüberliegend über dem Transportband angeordneten Absaugglocke 11 besteht. Die beheizbare Länge der Heizstation 10 beträgt typischerweise ca. 600 mm bei einer beheizbaren Breite von 280 mm. In der Heizstation 10 sind Infrarotstrahler angeordnet, die ihre Strahlung nach oben in Richtung des Transportbandes 18 bzw. der Reibbelagoberflächen abgeben können. Dabei kommen typischerweise 5 bis 40 Strahler zu je 3000 W Leistung bei einer Betriebsspannung von 230 V zum Einsatz. Die Strahler sind vorzugsweise in ihrem Abstand zum Transportband 18 einstellbar, wobei ein Abstand von ca. 40 mm voreingestellt wird. Durch entsprechend Schaltung oder einen anderen Aufbau kann die Anzahl der Strahler auch verringert werden, wenn der Prozeß es gestattet.

Ober die zwei Lüfter 21 werden die Anschlüsse der Infrarotstrahler in der Heizstation 10 gekühlt. Die Temperatur der Kühlluft wird von den Temperatursensoren 22 überwacht.

Bei der Bestrahlung anfallende Zersetzungsprodukte aus der Reibbelagoberfläche 19 werden in der Absaugglocke 11 gesammelt und von dem Gebläse 12 in der Decke der Absaugglocke entfernt. Das Gebläse 12 fördert typischerweise mit einer Geschwindigkeit von 7 bis 10 m/s bei einem Volumenstrom von 1000 m³/h. Die Abluft wird von einem Sensor 13 überwacht.

Im Anschluß an die Heizstation 10 ist unter dem Transportband 18 ein Infrarotsensor 20 angeordnet, welcher die Temperatur der Reibbelagoberfläche 19 erfaßt. Zur Kühlung kann er mit einem Druckluftanschluß verbunden sein. Weiterhin kann er vorzugsweise mit der Steuerung eines Pneumatikzylinders 14 verbunden sein, welcher über dem Transportband 18 angeordnet ist und mit welchem mangelhafte Reibbeläge ausgeschleust werden können.

Der Infrarotsensor 20 und der Pneumatikzylinders 14 befinden sich in einem Kühltunnel 17, welcher sich unmittelbar an die Heizstation 10 bzw. die Absaugglocke 11 anschließt und welcher das Transportband 18 umgibt. Etwa mittig an der Decke des Kühltunnels 17 ist ein Kühlgebläse 15 angeordnet, welches Kühlluft mit einer Geschwindigkeit von ca. 18 bis 22 m/s bei einem Volumenstrom von ca. 1000 m³/h fördern kann. Die Kühlluft wird dabei von einem Sensor 16 am Eingang des Gebläses überwacht.

Der Betrieb der Vorrichtung 100 erfolgt vorzugsweise wie folgt:

Die zu scorchenden Teile werden mit der Reibbelagoberfläche 19 nach unten auf das Zuförderband 18 gelegt bzw. von einer vorgeschalteten Anlage wie z.B. einer Schleifmaschine lagegerecht übergeben.

Vor der Infrarot-Heizstation 10 wird das erste zu scorchende Teil von dem Sensor 23 erfaßt, und das Infrarotmodul wird eingeschaltet. Dies geschieht ca. 2 s bevor das Teil im Strahlungsbereich ist. Das Infrarotmodul bleibt solange eingeschaltet, wie Teile vom Sensor 23 erkannt werden. Wenn länger als 30 s kein Teil über die Anlage geht, werden die Infrarotstrahler abgeschaltet. Die Lüfter 12, 15, 21 und das Transportband 18 laufen jedoch weiter.

Direkt im Anschluß an die Heizstation 10 wird durch das Infrarotthermometer 20 die Temperatur kontinuierlich registriert. Durch das Infrarotthermometer wird der Prozeß überwacht und die Gleichmäßigkeit der Scorchung sichergestellt. Alle Teile, deren Oberflächentemperatur nicht innerhalb eines voreingestellten Temperaturfensters von typischerweise 720 bis 760°C liegen, werden von dem Pneumatikzylinder 14 ausgeschleust.

Eine Produkt bedingte unterschiedliche Scorchintensität kann insbesondere durch die Bandgeschwindigkeit eingestellt werden. So ergibt bei den vorliegenden Abmessungen eine Bandgeschwindigkeit von 1,2 m/min eine Scorchzeit von 30 s (entsprechend einem Takt von 5 s), und eine Bandgeschwindigkeit von 1,8 m/min eine Scorchzeit von 20 s (entsprechend einem Takt von 3,3 s). Der Takt besagt, nach welcher Zeit am Ende der Anlage jeweils ein fertig behandelter Reibbelag vorliegt. Bei der Behandlung von Bremsbelägen mit äußeren Abmessungen von ca. 200 × 100 mm können sich maximal sechs Teile gleichzeitig in der beheizbaren Zone von 600 mm Länge aufhalten, so daß die Taktzeit ein Sechstel der Scorchzeit beträgt.

Eine unterschiedliche Scorchintensität kann ferner durch das Ein- oder Ausschalten von Infrarotstrahlern eingestellt werden.

Vor dem Einschalten der Anlage wird überprüft, daß folgende fünf Bedingungen erfüllt sind:
1. Abluftventilator 12 für die "Scorchgase" im Infrarotmodul muß laufen.
2. Kühlluftventilatoren 21 im Infrarotmodul müssen laufen.
3. Kühlluftventilator 15 der Kühlstrecke muß laufen.
4. Transportband 18 muß laufen (überwacht vom Sensor 24).
5. Infrarotthermometer 20 muß funktionieren.

Wenn alle fünf Bedingungen gegeben sind und ein Bremsbelag vom Sensor 23 an der Einlaufstrecke erkannt wird, werden die Infrarotstrahler eingeschaltet. Um eine Überlastung der elektrischen Einspeisung so gering wie möglich zu halten (es herrscht ein 15-facher Einschaltstrom für 50 ms), werden die Strahler über Schutzschalter nacheinander eingeschaltet.

Wenn eine der oben genannten fünf Bedingungen nicht erfüllt ist und/oder ein oder mehrere Strahler ausfallen, wird das Infrarotmodul sofort abgeschaltet und eine Störmeldung ausgegeben sowie mit der Ausschleusung von Teilen begonnen, die nicht die vorgeschriebene Oberflächentemperatur aufweisen. An vorgeschaltete Anlagen wird ein Signal ausgegeben, keine neuen Teile an die Vorrichtung 100 abzugeben.

Solange die Anlage ohne Störungen läuft und Teile vom Sensor 23 erkannt werden, bleibt das Infrarotmodul eingeschaltet. Sind länger als 30 s keine Teile zur Vorrichtung 100 gefördert worden, werden die Infrarotstrahler ausgeschaltet. Die unter den obigen fünf Bedingungen genannten Aggregate laufen jedoch weiter. Erst nach ca. 300 s ohne Teile können alle Aggregate ausgeschaltet werden. Die Anlage läuft aus diesem "Standby" Zustand automatisch an, wenn von der vorgeschalteten Anlage ein Signal geschaltet wird, daß Teile an die Vorrichtung 100 übergeben werden bzw. wenn der Sensor 23 (z.B. eine Lichtschranke) in der Einlaufstrecke ein Teil registriert.

Wird die Anlage abgeschaltet (nicht Not-Aus oder Hauptschalter), müssen alle Lüfter 300 s nachlaufen, und das Transportband 18 muß 60 s weiterlaufen, bevor der Antrieb ausgeschaltet wird.

### Bezugszeichen:

- 100: Vorrichtung zur thermischen Behandlung
- 10: Heizstation
- 11: Absaugglocke
- 12: Gebläse
- 13: Sensor
- 14: Pneumatikzylinder
- 15: Kühlluftventilator
- 16: Sensor
- 17: Kühltunnel
- 18: Transportband
- 18a: Obere Vorlaufseite von 18
- 19: Reibbelagoberfläche
- 20: Infrarotthermometer
- 21: Lüfter
- 22: Temperatursensor
- 23: Objekterfassung
- 24: Sensor
- 25: Umlenkrolle
- 30: Reibbeläge

## Patentansprüche

1. Verfahren zur thermischen Behandlung von Reibbelagoberflächen (19), vermittels Lichtstrahlen hoher Energie (Laser), wobei die Reibbelagoberfläche für eine begrenzte Zeitdauer auf eine erhöhte Temperatur gebracht, während der Bestrahlung an der Infrarotlichtquelle entlang transportiert und nach der Bestrahlung abgekühlt wird,
**dadurch gekennzeichnet**,
- die gesamte Fläche der Reibbelagoberfläche (19) unter Ausschluss nicht bestrahlter Abschnitte in einer inerten, oxidierenden oder reduzierenden Atmosphäre oder einer Unterdruck-Atmospähre wärmebestrahlt wird,
- zur Temperaturerhöhung der Reibbelagoberfläche (19) ein kurzwelliges Infrarotlicht mit einer Wellenlänge von 780 bis 1400 nm verwendet wird, wobei das Intensitätsmaximum bei 1200 nm liegt,
- die Reibbelagoberfläche (19) mit einer Leistungsschicht des Infrarotlichtes von 150 bis 800 kW/m² bei einer Temperaturerhöhung bis zu einer Temperatur von 700° C bis 900° C für einen Zeitraum von 5 s bis 40 s, insbesondere 25 s bis 35 s, bestrahlt wird,
- die Reibbelagoberfläche (19) während der Bestrahlung an der Infrarotlichtquelle mit einer Geschwindigkeit von 1,0 bis 2,0 m/min. entlang transportiert wird.

2. Verfahren nach Anspruch 1,
**dadurch gekennzeichnet,**
**daß** die Temperatur der Reibbelagoberfläche (19) gemessen und in Abhängigkeit hiervon der Behandlungsprozeß gesteuert wird.

3. Verfahren nach einem der Ansprüche 1 und 2,
**dadurch gekennzeichnet,**
**daß** für den Betrieb der Infrarotlichtquelle mindestens eine und vorzugsweise alle der folgenden Maßnahmen in Betrieb sein müssen:
a) Absaugung der Abgase im Behandlungsraum,
b) Kühlung der Reibbelagoberfläche (19) nach der thermischen Behandlung,
c) Kühlung der Infrarotlichtquellen,
d) Transport der Reibbelagoberflächen,
e) Prozeßüberwachungssensoren, insbesondere Temperatursensoren (20) für die Reibbelagoberflächen.

4. Vorrichtung zur thermischen Behandlung von Reibbelagoberflächen (19) mit einer Heizstation (10) zur Erhitzung der Reibbelagoberflächen, wobei in der Heizstation mindestens eine Infrarotlichtquelle angeordnet ist und durch die Heizstation (10) eine Fördereinrichtung (18) für die Reibbeläge führt und sich an die Heizstation (10) eine Kühlstation (17) anschließt,
**dadurch gekennzeichnet,**
**daß** die Heizstation (10) und/oder die Kühlstation (17) eine Absaugeinrichtung (11, 12, 15) aufweist, dass sich im Anschluß an die Heizstation (10) ein Temperatursensor (20) anschließt, welcher vorzugsweise mit der Steuerung der Infrarotlichtquellen verbunden ist, dass im Anschluß an die Heizstation (10) eine Ausschleusung (14) für defekte Reibbeläge angeordnet ist und dass vor der Heizstation (10) eine Objekterfassung (23) angeordnet ist, mit welcher das Eintreten von Reibbelägen (19) in die Heizstation erkannt werden kann und welche vorzugsweise mit der Steuerung der Infrarotlichtquelle verbunden ist.

## Claims

1. Method for the heat treatement of friction lining surfaces (19) by means of high energy light beams (laser), whereby the friction lining surface is brought to an increased temperature for a limited time period, is transported along the infrared light source during the irradiation and is cooled-off after the irradiation,
**characterized in**
- **that** the whole surface of the friction lining upper surface (19) to the exclusion of non irradiated sections is irradiated by heat in an inert, oxidizing or reducing atmosphere, or in a negative pressure atmosphere,
- for the raise of temperature of the friction lining surface (19) a short-wave infrared light with a wavelength of 780 to 1400 nm is used, whereby the maximum of intensity is at 1200 nm,
- the friction lining surface (19) is irradiated with a power layer of the infrared light of 150 to 800 kW/m² for a temperature raise up to a temperature of 700° C to 900° C for a time period of 5 s to 40 s, in particular of 25 s to 35 s,
- the friction lining surface (19) is transported during the irradiation along the infrared light source with a rate of 1,0 to 2,0 m/min.

2. Method according to claim 1,
**characterized in**
**that** the temperature of the friction lining surface (19) is measured and the treatment process is controlled depending thereon.

3. Method according to any of the claims 1 and 2,
**characterized in**
**that**, for the operation of the infrared light source, at least one and preferably all the following measures must be in operation:
a) Exhaust gas removal by suction in the treatment area,
b) Cooling of the friction lining surface (19) after the heat treatment,
c) Cooling of the infrared light sources,
d) Transport of the friction lining surfaces,
e) Process control sensors, in particular temperature sensors (20) for the friction lining surfaces.

4. A device for the heat treatment of friction lining surfaces (19) with a heating station (10) for heating the friction lining surfaces, whereby at least one infrared light source is placed in the heating station and a transport device (18) for the friction linings passes through the heating station (10) and a cooling station (17) follows the heating station (10),
**characterized in**
**that** the heating station (10) and/or the cooling station (17) has a suction device (11, 12, 15), that a temperature sensor (20) which is preferably connected with the control of the infrared light sources follows the heating station (10), that a screening device (14) for defect friction linings is placed after the heating station (10) and that an object dectecting device (23) is placed before the heating station (10), detectind device with which the incoming of friction linings (19) into the heating station can be detected and which is preferably connected with the control of the infrared light source.

## Revendications

1. Procédé pour le traitement thermique de surfaces de garnitures de friction (19) au moyen de faisceaux lumineux à haute énergie (laser), la surface de la garniture de friction étant amenée pour une durée limitée à une température élevée, étant transportée le long de la source de lumière infrarouge pendant l'irradiation et étant refroidie après l'irradiation,
**caractérisé en ce que**
- toute la surface de la surface supérieure de la garniture de friction (19), à l'exclusion de sections non irradiées, est irradiée par la chaleur dans une atmosphère inerte, oxydante ou réductrice ou dans une atmosphère à pression négative,
- pour l'augmentation de la température de la surface de la garniture de friction (19) un lumière infrarouge à ondes courtes avec une longueur d'ondes de 780 à 1400 nm est utilisée, le maximum d'intensité étant à 1200 nm,
- la surface de la garniture de friction (19) étant irradiée avec une couche de puissance de la lumière infrarouge de 150 à 800 kW/m² pour une augmentation de température jusqu'à une température de 700° C à 900° C pendant une période de 5 s à 40 s, en particulier de 25 s à 35 s,
- la surface de la garniture de friction (19) étant transportée pendant l'irradiation le long de la source de lumière infrarouge avec une vitesse de 1,0 à 2,0 m/mn.

2. Procédé selon la revendication 1,
**caractérisé en ce**
**que** la température de la surface de la garniture de friction (19) est mesurée et que le processus de traitement est commandé en fonction de celle-ci.

3. Procédé selon l'une des revendications 1 et 2,
**caractérisé en ce**
**que**, pour le fonctionnement de la source de lumière infrarouge, au moins l'une des mesures suivantes et de préférence toutes les mesures suivantes doivent être en service:
a) Aspiration des gaz perdus dans l'espace de traitement,
b) Refroidissement de la surface de la garniture de friction (19) après le traitement thermique,
c) Refroidissement des sources de lumière infrarouge,
d) Transport des surfaces de garniture de friction,
e) Capteurs de surveillance du processus, en particulier capteurs de température (20) pour les surfaces de garnitures de friction.

4. Dispositif pour le traitement thermique de surfaces de garnitures de friction (19) avec un poste de chauffage (10) pour le réchauffement des surfaces des garnitures de friction, au moins une source de lumière infrarouge étant placée dans le poste de chauffage et un dispositif de transport (18) pour les garnitures de friction traversant le poste de chauffage (10) et un poste de refroidissement (17) suivant le poste de chauffage (10),
**caractérisé en ce**
**que** le poste de chauffage (10) et/ou le poste de refroidissement (17) présente un dispositif d'aspiration (11, 12, 15), qu'un capteur de température (20), qui est relié de préférence à la commande des sources de lumière infrarouge, suit le poste de chauffage (10), qu'un éclusage (14) pour des garnitures de friction défectueuses est placé après le poste de chauffage (10) et qu'un dispositif de détection d'objet (23) avec lequel l'entrée de garnitures de friction (19) dans le poste de chauffage peut être détectée et qui est relié de préférence à la commande de la source de lumière infrarouge, est placé devant le poste de chauffage (10).
